# EUROPEAN PATENT APPLICATION

(11) **EP 4 269 070 A1**
(43) Date of publication of application: **01.11.2023**
(21) Application number: 21915370.7
(22) Date of filing: 10.02.2021
(51) Int. Cl.: B29C 64/106, B29C 64/255, B29C 64/336, B29C 64/268, B65D 83/00, B33Y 10/00, B33Y 30/00, B33Y 40/00, B33Y 80/00, A61C 13/00

(54) **3D PRINTER CARTRIDGE AND 3D PRINTER**

(30) Priority: 28.12.2020 KR 20200184601
(71) Applicant: Unijet Co., Ltd., Seongnam-si, Gyeonggi-do 13203 (KR)
(72) Inventor: LEE, Sung-jin, Seoul 05788 (KR); KIM, Seog-soon, Seongnam-si Gyeonggi-do 13203 (KR); JUNG, Jin-seok, Gwangju-si Gyeonggi-do 12773 (KR)
(74) Representative: Krauns, Christian
(86) International application number: PCT/KR2021/001777
(87) International publication number: WO 2022/145570

(57) **Abstract**

The present invention relates to a 3D printer cartridge and a 3D printer, wherein a cartridge filled with a liquid material is used to prevent the degradation of the liquid material, and a 3D structure can be manufactured without contamination. To this end, the 3D printer according to the present invention comprises: a liquid material supply unit provided with an ejection hole, for ejecting the liquid material upward, and a storage part, which is connected to the ejection hole and in which the ejected liquid material is stored; a liquid layer-forming unit that moves the liquid material, stored in the storage part, to a work holder, which is a region irradiated with a shaping beam, and forms a liquid layer for 3-dimensional shaping; and a 3-dimensional shaping unit which performs 3-dimensional shaping by irradiating, with the shaping beam, the liquid layer formed on the work holder.

## Description

### TECHNICAL FIELD

The present invention relates to a three-dimensional (3D) printer cartridge and a 3D printer, and more particularly, to a 3D printer cartridge and a 3D printer, which are capable of preventing degradation of a liquid material by using a cartridge filled with the liquid material and manufacturing a 3D structure without contamination.

### BACKGROUND ART

A three-dimensional (3D) printing technology has been developed and used in various industrial fields, and particularly, a precise 3D shaped structure may be simply manufactured by using a photocurable 3D printer.

A typical photocurable 3D printer manufactures a 3D shaped structure by continuously repeating a process of irradiating a work plate with light and a process of adjusting a height of the work plate in a state in which a photocurable liquid material is filled into a water tank.

However, the 3D printer using the above-described method has a disadvantage of a long manufacturing time because the 3D printer may not reuse the liquid material remained in the water tank after the 3D shaped structure is manufactured and may need to clean the liquid material remained in the water tank in order to manufacture a next shaped structure after one shaped structure is manufactured.

Particularly, since the typical photocurable 3D printer may fill only one kind of liquid material in the water tank, the typical photocurable 3D printer has a disadvantage in that a color and a texture of each layer of a 3D structure may not be adjusted. That is, the typical photocurable 3D printer has a limitation of using an extremely inconvenient method of changing the liquid material or the water tank whenever each layer is manufactured in order to differently manufacture the color and texture of each layer of the 3D structure.

(Related art: Korean Patent Registration No. 10-2148822, Registered date: August 21, 2020)

### DISCLOSURE OF THE INVENTION

### TECHNICAL PROBLEM

The present invention provides a three-dimensional (3D) printer cartridge and a 3D printer, which are capable of preventing degradation of a liquid material by using a cartridge filled with the liquid material and manufacturing a 3D structure without contamination.

### TECHNICAL SOLUTION

In order to solve the above-described technical problem, the present invention provides a three-dimensional (3D) printer including: a liquid material supply unit having an ejection hole configured to allow a liquid material to be ejected upward and a storage part which is connected to the ejection hole and in which the ejected liquid material is stored; a liquid layer-forming unit configured to form a liquid layer for 3D shaping by moving the liquid material stored in the storage part to a region irradiated with a shaping beam; and a 3D shaping unit configured to perform the 3D shaping by irradiating the liquid layer formed on the work holder with the shaping beam.

Preferably, the liquid material supply unit may include a cartridge filled with the liquid material, one side surface of the cartridge may be the storage part, and the ejection hole communicating with the inside of the cartridge may be defined in one side surface of the cartridge.

Preferably, a pressing plate configured to press the liquid material filled in the cartridge may be disposed in the cartridge, and the liquid material may be ejected through the ejection hole when the liquid material filled in the cartridge is pressed by the pressing plate.

Preferably, the inside of the cartridge may be divided into a plurality of spaces, and the pressing plates may be disposed in the spaces, respectively.

Preferably, liquid materials having different properties may be filled in the spaces defined in the cartridge, respectively.

Preferably, the inside of the cartridge may be divided into a first space filled with a first liquid material, ..., and a n-th space filled with a n-th liquid material, and a first ejection hole connected to the first space, ..., and a n-th ejection hole connected to the n-th space may be defined in ejection positions that are mixed on the storage part.

Preferably, the liquid material supply unit may include a pressing unit configured to press the pressing plate disposed in the cartridge for ejecting the liquid material filled in the cartridge.

Preferably, the liquid layer-forming unit may include a recoater blade that reciprocates to form a liquid layer having a predetermined thickness on the work holder by sweeping the liquid material stored in the storage part, and the 3D shaping unit may include: a light irradiator configured to perform the 3D shaping by irradiating the liquid layer formed on the work holder with the shaping beam according to a desired pattern; and a vertical driving unit configured to ascend or descend the work holder by steps.

Preferably, a waste box configured to collect the liquid material remained after forming the liquid layer by the recoater blade may be disposed at one side of the 3D shaping unit.

In order to solve the above-described technical problem, the present invention provides a 3D printer cartridge that is disposed in a 3D printer including: a liquid material supply unit having an ejection hole configured to allow a liquid material to be ejected upward and a storage part which is connected to the ejection hole and in which the ejected liquid material is stored; a liquid layer-forming unit configured to form a liquid layer for 3D shaping by moving the liquid material stored in the storage part to a region irradiated with a shaping beam; and a 3D shaping unit configured to perform the 3D shaping by irradiating the liquid layer formed on the work holder with the shaping beam. Here, the cartridge is filled with the liquid material, one side of the cartridge is the storage part, and the ejection hole communicates with the one side.

Preferably, a pressing plate configured to press the liquid material filled in the cartridge may be disposed in the cartridge, and the liquid material may be ejected through the ejection hole when the liquid material filled in the cartridge pressed by the pressing plate.

Preferably, the inside of the cartridge may be divided into a plurality of spaces, and the pressing plates may be disposed in the spaces, respectively.

Preferably, liquid materials having different properties may be filled in the spaces defined in the cartridge, respectively.

Preferably, the inside of the cartridge may be divided into a first space filled with a first liquid material, ..., and a n-th space filled with a n-th liquid material, and a first ejection hole connected to the first space, ..., and a n-th ejection hole connected to the n-th space may be defined in ejection positions that are mixed on the storage part.

### ADVANTAGEOUS EFFECTS

The above-described present invention has the advantage of preventing the degradation of the liquid material by using the cartridge filled with the liquid material and manufacturing the three-dimensional (3D) shaped structure without contamination.

Also, the present invention has the advantage of adjusting the color and texture of each layer of the 3D structure by dividing the inner space of the cartridge so that the liquid materials having different properties are filled in the divided spaces, respectively, and not requiring external painting and a post-process after the 3D structure is completely manufactured.

The object of the present invention is not limited to the aforesaid, but other objects not described herein will be clearly understood by those skilled in the art from descriptions below.

### BRIEF DESCRIPTION OF THE DRAWINGS

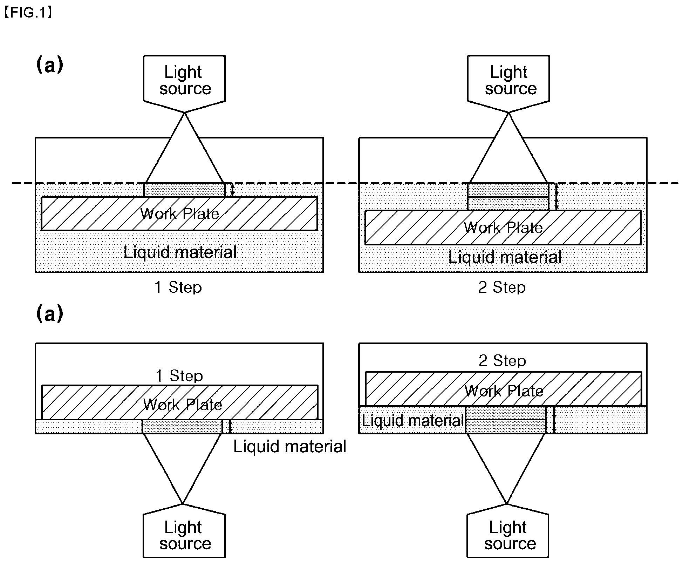

FIG. 1 is a view for explaining a method for manufacturing a three-dimensional (3D) shaped structure by using a typical photocurable 3D printer.

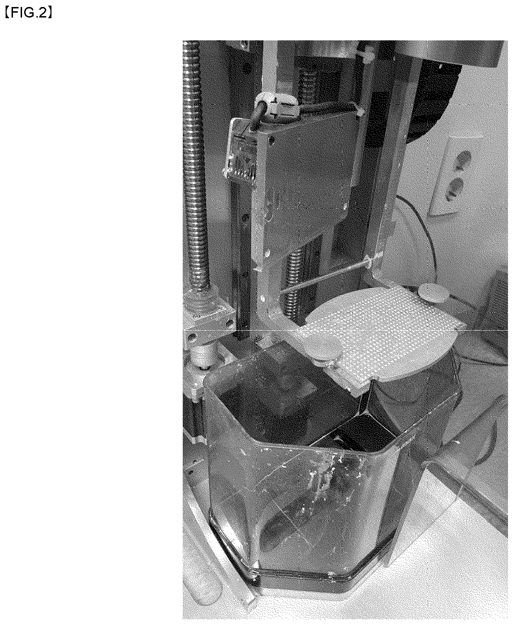

FIG. 2 is a photograph showing a state of contamination occurring when the 3D shaped structure is manufactured by using the typical photocurable 3D printer.
FIG. 3 is a perspective view illustrating a 3D printer according to an embodiment of the present invention.
FIG. 4 is a perspective view illustrating an internal configuration of the 3D printer according to an embodiment of the present invention.
FIGS. 5 to 8 are cross-sectional views for explaining an operation of the 3D printer according to an embodiment of the present invention.
FIG. 9 is a perspective view illustrating a 3D printer cartridge according to another embodiment of the present invention.
FIG. 10 is a perspective view illustrating the 3D printer cartridge according to another embodiment of the present invention.
FIG. 11 is a perspective view illustrating a 3D printer cartridge according to another embodiment of the present invention.
FIG. 12 is a cross-sectional view illustrating a 3D printer cartridge according to another embodiment of the present invention.
FIGS. 13 to 15 are detailed views illustrating a first ejection passage and a first branch passage, which are connected to a first space, a second ejection passage and a second branch passage, which are connected to a second space, and a third ejection passage and a third branch passage, which are connected to a third space of a 3D printer cartridge according to another embodiment of the present invention.
FIGS. 16 and 17 are photographs showing teeth.

### MODE FOR CARRYING OUT THE INVENTION

The present invention may be carried out in various embodiments without departing from the technical ideas or primary features. Therefore, the embodiments of the present invention are merely illustrative, but should not be limitedly interpreted.

It will be understood that although the terms of first and second are used herein to describe various elements, these elements should not be limited by these terms.

The terms are only used to distinguish one component from other components. For example, a first element referred to as a first element in one embodiment can be referred to as a second element in another embodiment.

As used herein, the term and/or includes any and all combinations of one or more of the associated listed items.

It will also be understood that when an element is referred to as being "`connected to" or "engaged with" another element, it can be directly connected to the other element, or intervening elements may also be present.

It will also be understood that when an element is referred to as being 'directly connected to' another element, there is no intervening elements.

In the following description, the technical terms are used only for explaining a specific exemplary embodiment while not limiting the present invention. The terms of a singular form may include plural forms unless referred to the contrary.

The meaning of `include' or 'comprise' specifies a property, a number, a step, a process, an element, a component, or a combination thereof in the specification but does not exclude other properties, numbers, steps, processes, elements, components, or combinations thereof.

Unless terms used in the present invention are defined differently, the terms may be construed as meaning known to those skilled in the art.

Terms such as terms that are generally used and have been in dictionaries should be construed as having meanings matched with contextual meanings in the art. In this description, unless defined clearly, terms are not ideally, excessively construed as formal meanings.

Hereinafter, embodiments disclosed in this specification is described with reference to the accompanying drawings, and the same or corresponding components are given with the same drawing number regardless of reference number, and their duplicated description will be omitted.

Moreover, detailed descriptions related to well-known functions or configurations will be ruled out in order not to unnecessarily obscure subject matters of the present invention.

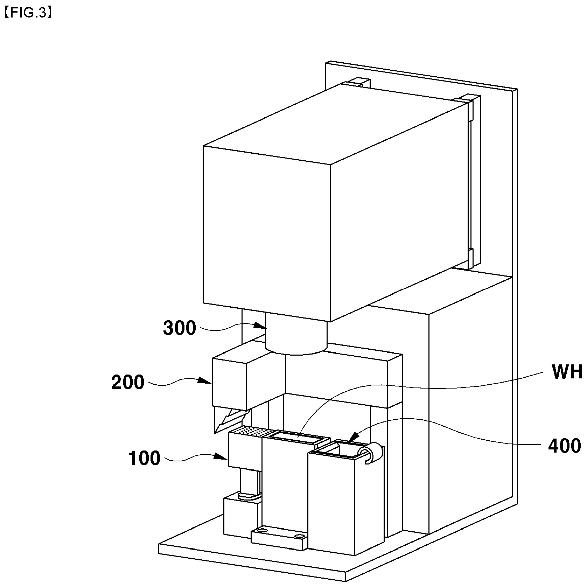

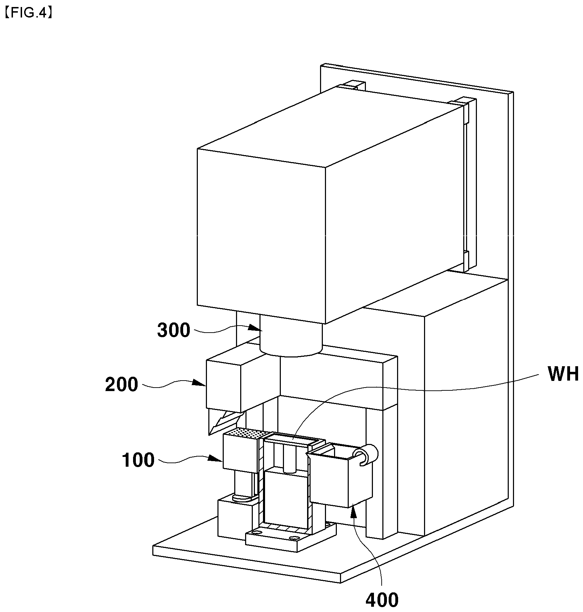

As illustrated in FIGS. 3 to 5, a three-dimensional (3D) printer according to an embodiment of the present invention includes a liquid material supply unit 100, a liquid layer-forming unit 200, and a 3D shaping unit 300.

The liquid material supply unit 100 is a portion that supplies a liquid material R for manufacturing a 3D shaped structure, the liquid layer-forming unit 200 is a portion that forms a liquid layer L for forming each layer of the 3D shaped structure, and the 3D shaping unit 300 is a portion that cures the liquid material R by irradiating the liquid layer L with a shaping beam UV-L according to a pattern corresponding to a shape of the 3D shaped structure.

Firstly, the liquid material supply unit 100 will be described.

The liquid material supply unit 100 that is a portion for supplying a liquid material R for manufacturing the 3D shaped structure includes an ejection hole 110h allowing the liquid material R to be ejected upward and a storage part 111 which is connected to the ejection hole 110h and in which the ejected liquid material R is stored.

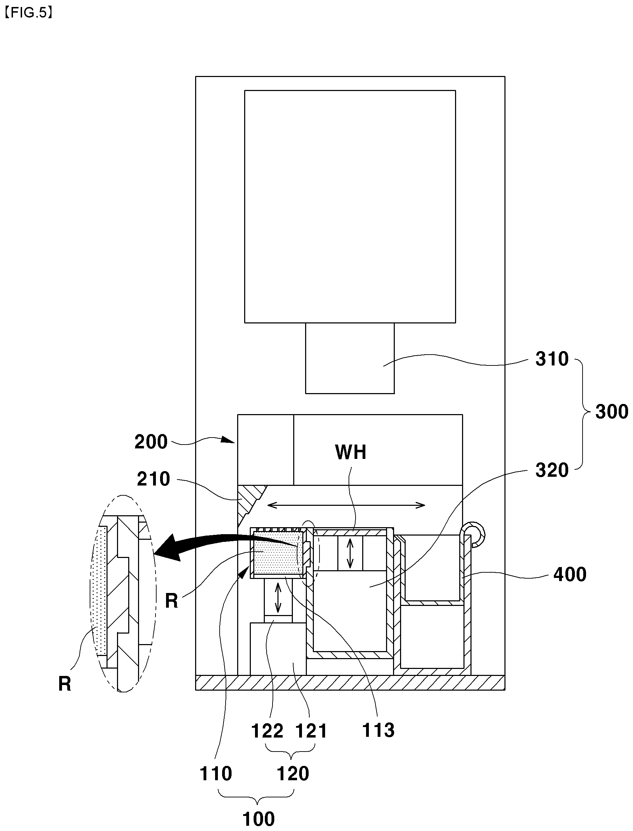

Specifically, as illustrated in FIGS. 5 to 8, the liquid material supply unit 100 may include a cartridge 110 including the ejection hole 110h and the storage part 111, and the cartridge 110 may be mounted to the 3D printer according to the embodiment.

The liquid material R is filled into the cartridge 110, a flat surface of a top surface of the cartridge 110 is contained in the storage part 111, and the ejection hole 110h through which the liquid material R is ejected is defined in the flat surface of the top surface of the cartridge 110 communicating with the inside of the cartridge 110.

The liquid material R has a predetermined viscosity and is cured by ultraviolet rays.

A pressing plate 113 for pressing the liquid material R filled in the cartridge 110 is disposed in the cartridge 110, and the liquid material R is ejected through the ejection hole 110h when the liquid material R filled in the cartridge 110 is pressed by the pressing plate 113.

For example, as the storage part 111 and the ejection hole 110h are formed on the top surface of the cartridge 110, and a lower portion of the cartridge 110 has an opened shape, the pressing plate 113 may be assembled by being inserted into an opening of the cartridge 110 in a closely contact manner.

Thus, when the pressing plate 113 assembled to the opening of the cartridge 110 is pressed toward an upper portion of the cartridge 110, the liquid material R filled in the cartridge 110 is ejected through the ejection hole 110h and stored in the storage part 111.

The cartridge 110 may be mounted and fixed to a portion of the 3D printer according to the embodiment. For example, as a projection is formed on a side surface of the cartridge 110 according to the embodiment, and a groove is defined in a side surface of the 3D modeling unit 300 of the 3D printer according to the embodiment, the cartridge 110 may be mounted in such a manner that the projection and the groove may be coupled to each other. Alternatively, the cartridge 110 may be mounted in various mounting structures.

The cartridge 110 is mounted and fixed to one side surface of the 3D modeling unit 300 of the 3D printer according to the embodiment so that each of the storage part 111 and the ejection hole 110h face upward, and the pressing plate 113 faces downward.

Also, the liquid material supply unit 100 includes a pressing unit 120 for pressing the pressing plate 113 of the cartridge 110 to eject the liquid material R filled in the cartridge 110.

The pressing unit 120 may include a piston 121 and a piston rod 122, the piston rod 122 may be operated in a vertical direction, and an upper end of the piston rod 122 may press the pressing plate 113 of the cartridge 110 upward.

That is, as the upper end of the piston rod 122 presses the pressing plate 113 of the cartridge 110, the pressing plate 113 is moved into the cartridge 110 to press the liquid material R filled therein.

According to the above-described configuration of the liquid material supply unit 100 including the cartridge 110 and the pressing unit 120, when the pressing plate 113 of the cartridge 110 is pressed by the pressing unit 120 in a state in which the replaceable cartridge 110 is mounted to the 3D printer according to the embodiment, the liquid material R in the cartridge 110 is ejected through the ejection hole 110h, and the liquid material ejected through the ejection hole 110h is stored in the storage part 111 that is the top surface of the cartridge 110.

Next, the liquid layer-forming unit 200 will be described.

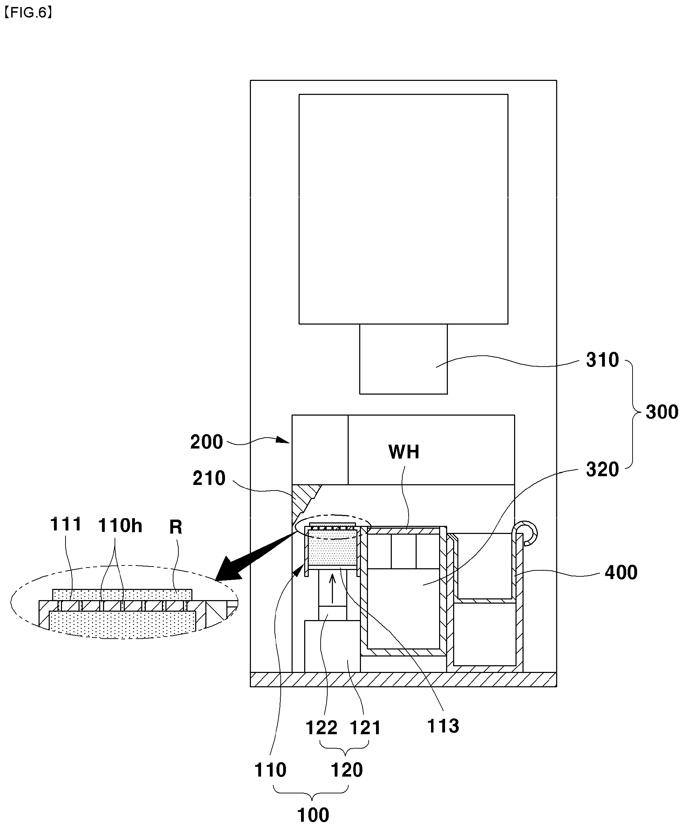

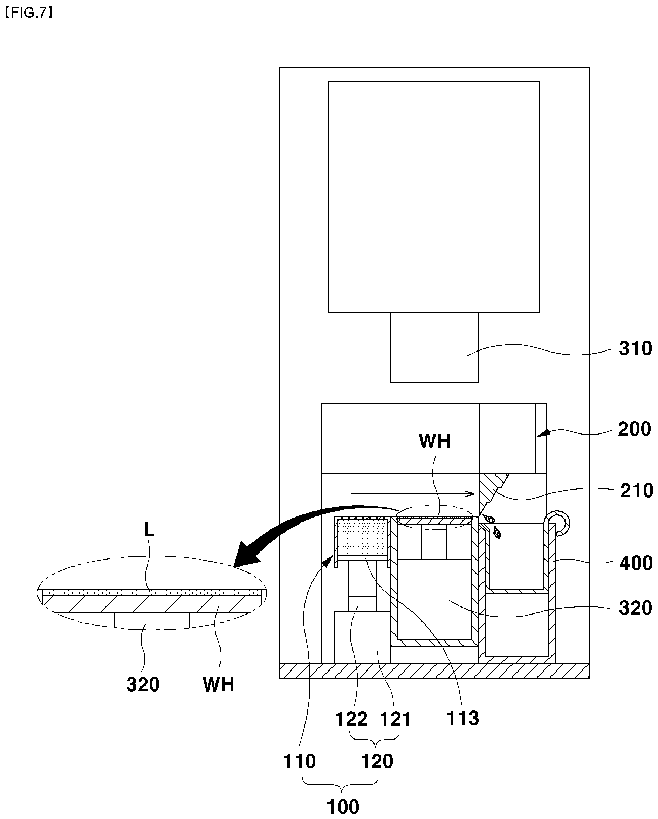

As illustrated in FIGS. 6 and 7, the liquid layer-forming unit 200 that is a portion for forming the liquid layer L for forming each layer of the 3D shaped structure forms the liquid layer L for forming the 3D shaped structure by moving the liquid material R stored in the storage part 111 of the cartridge 110 to a work holder WH that is a region irradiated with the shaping beam UV-L.

The liquid layer-forming unit 200 includes a recoater blade 210 that reciprocates to sweep the liquid material R stored in the storage part 111 and form the liquid layer L having a predetermined thickness on the work holder WH.

For example, the recoater blade 210 may perform a reciprocating movement in left and right directions of FIG. 5, and the reciprocating movement of the recoater blade 210 may be performed by a well-known driving unit.

The recoater blade 210 may have a structure similar to that of a blade-shaped recoater used for a powder flattening operation in a selective laser sintering (SLS) method among typical 3D printing methods.

According to the above-described configuration of the liquid layer-forming unit 200 including the recoater blade 210, the liquid layer L having a thin thickness may be formed on the work holder WH by sweeping the liquid material R ejected through the ejection hole 110h of the cartridge 110 and stored in the storage part 111, and this operation of the recoater blade 210 may be repeated for each process of forming each layer of the 3D shaped structure.

Next, the 3D shaping unit 300 will be described.

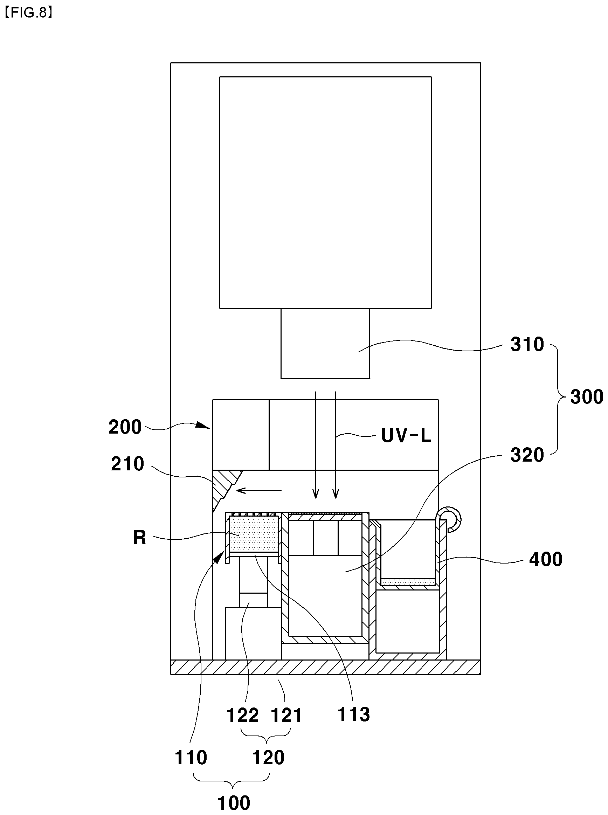

As illustrated in FIG. 8, the 3D shaping unit 300 that is a portion for curing the liquid material R by irradiating the liquid layer L with the shaping beam UV-L according to the pattern corresponding to the shape of the 3D shaped structure performs a 3D shaping by irradiating the liquid layer L formed on the work holder WH with the shaping beam UV-L.

The 3D shaping unit 300 includes a light irradiator 310 and a vertical driving unit 320.

The light irradiator 310 performs the 3D shaping by irradiating the liquid layer L formed on the work holder WH with the shaping beam UV-L according to a desired pattern.

For example, the light irradiator 310 may irradiate the liquid material R with ultraviolet rays for curing the liquid material R, a plurality of light sources that are individually turned-on or off are disposed on a bottom surface of the light irradiator 310, and the plurality of light sources are individually turned-on or off in correspondence to the shape of 3D shaped structure.

Thus, a region irradiated with the ultraviolet rays of the liquid layer L is cured to form one layer of the 3D shaped structure, and the rest area of the liquid material R is not cured and maintains a liquid state.

The vertical driving unit 320 that is a unit that descends or ascends the work holder WH by steps descends the work holder WH one step to form a next liquid layer L after a desired pattern in the liquid layer L is cured by the light irradiator 310.

According to the above-described configuration of the 3D shaping unit 300 including the light irradiator 310 and the vertical driving unit 320, the 3D shaped structure may be formed by repeating the process of curing the desired pattern in the liquid layer L.

Also, a waste box 400 that collects the liquid material R remained after forming the liquid layer L by the recoater blade 210 may be disposed at one side of the 3D shaping unit 300.

An operation of the above-described 3D printer including the liquid material supply unit 100, the liquid layer-forming unit 200, and the 3D shaping unit 300 according to an embodiment of the present invention will be described with reference to FIGS. 5 to 8.

First, the cartridge 110 is mounted to the 3D printer as illustrated in FIG. 5, and then the pressing plate 113 of the cartridge 110 is pressed by the pressing unit 120 to eject the liquid material R in the cartridge 110 through the ejection hole 110h so as to be stored in the storage part 111 as illustrated in FIG. 6.

Thereafter, as illustrated in FIG. 7, the recoater blade 210 is moved in a right direction of the drawing to form the liquid layer L on the work holder WH.

Thereafter, as illustrated in FIG. 8, the liquid layer L on the work holder is irradiated with ultraviolet rays according to a desired pattern so that the desired pattern is cured.

Thereafter, the vertical driving unit 320 is operated to descend the work holder WH one step, and then the processes of FIGS. 6 to 8 are repeated to form the 3D shaped structure.

Here, a release film may be mounted onto a top surface of the work holder WH before forming the 3D shaped structure, and the 3D shaped structure may be easily separated by the release film after the 3D shaped structure is shaped.

The above-described release film may be fixed to the top surface of the work holder WH by negative pressure, and to this end, a plurality of holes may be defined in the top surface of the work holder WH to provide negative pressure.

A structure of a cartridge 110' according to another embodiment, which is applied to the 3D printer according to an embodiment of the present invention, will be described.

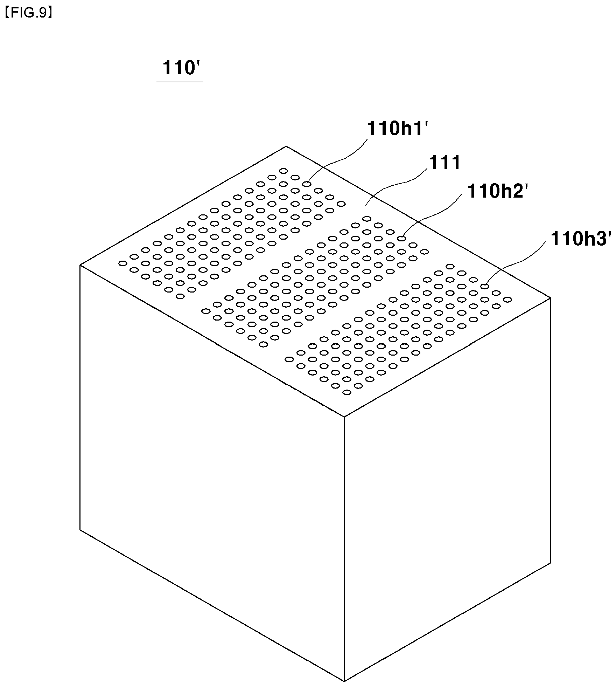

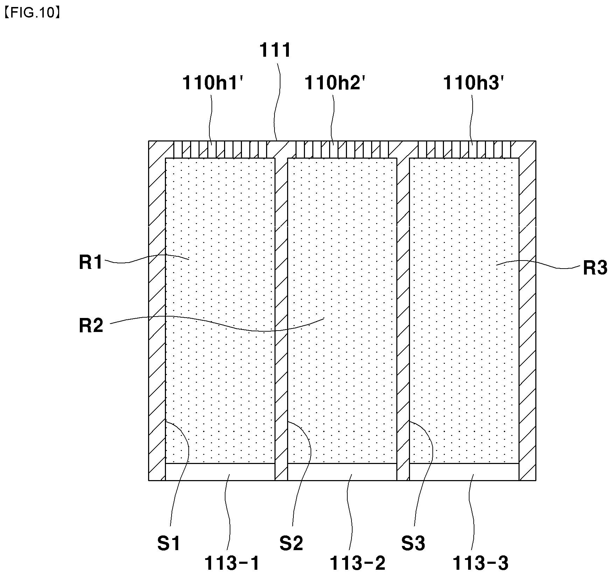

As illustrated in FIGS. 9 and 10, the cartridge 110' according to another embodiment of the present invention is configured such that the inside of the cartridge 110' is divided into a plurality of spaces S1, S2, and S3, and pressing plates 113-1, 113-2, and 113-3 are disposed in the spaces S1, S2, and S3, respectively.

Specifically, the inside of the cartridge 110' may include a first space S1 filled with a first liquid material R1, a second space S2 filled with a second liquid material R2, and a third space S3 filled with a third liquid material R3. Here, the first liquid material R1, the second liquid material R2, and the third liquid material R3 may be the same material as each other or materials having different properties from each other.

Thus, the first liquid material R1 filled in the first space S1 may be ejected through a first ejection hole 110h1' communicating with the first space S1, the second liquid material R2 filled in the second space S2 may be ejected through a second ejection hole 110h2' communicating with the second space S2, and the third liquid material R3 filled in the third space S3 may be ejected through a third ejection hole 110h3' communicating with the third space S3.

The first liquid material R1, the second liquid material R2, and the third liquid material R3 may be made of materials having different properties, e.g., materials having different colors and particle sizes.

Thus, as the materials are used by ejecting only one of the first liquid material R1, the second liquid material R2, and the third liquid material R3 or appropriately mixing the first liquid material R1, the second liquid material R2, and the third liquid material R3, the color and texture of the 3D shaped structure may be changed according to stacking steps.

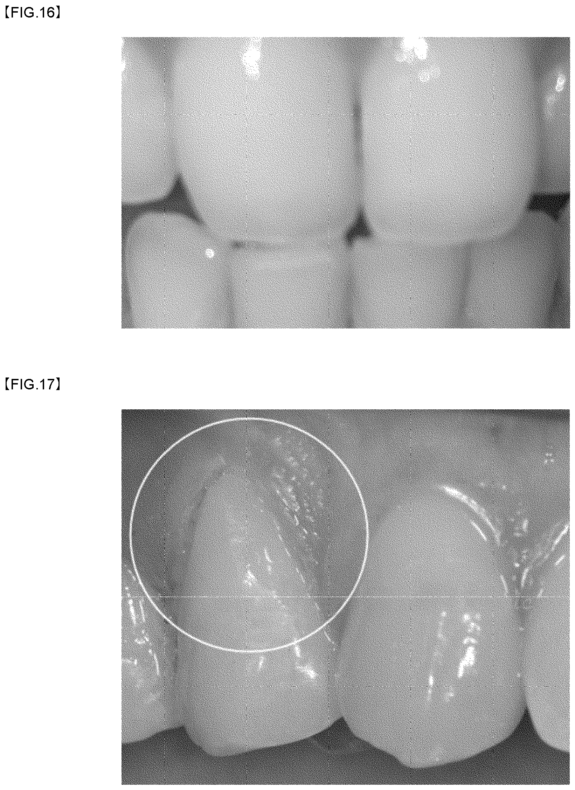

For example, as illustrated in FIGS. 16 and 17, since a root of a tooth has a rough surface and a yellow color while a tip of the tooth has a smooth surface and a color close to white, an artificial tooth having a color and a texture, which are extremely similar to those of a tooth, may be manufactured by appropriately adjusting the first liquid material R1, the second liquid material R2, and the third liquid material R3.

A structure of a cartridge 110" according to another embodiment, which is applied to the 3D printer according to an embodiment of the present invention, will be described.

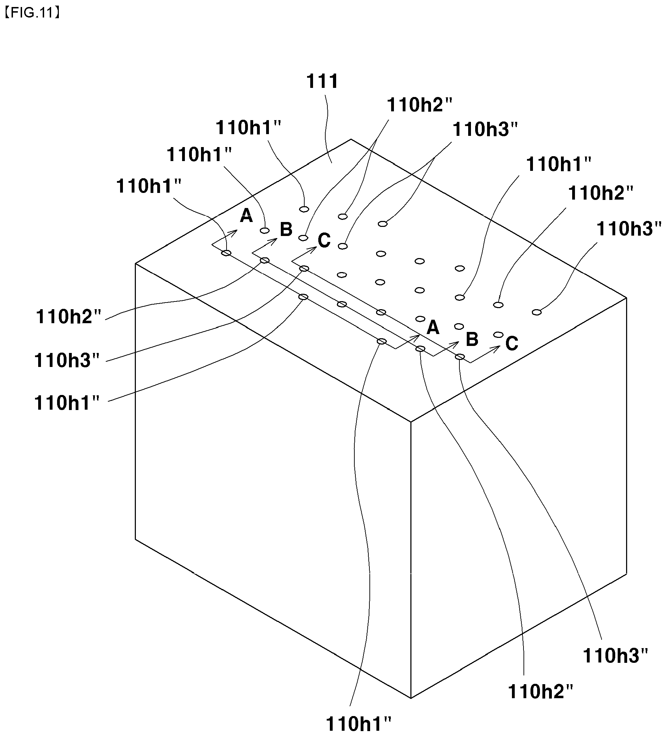

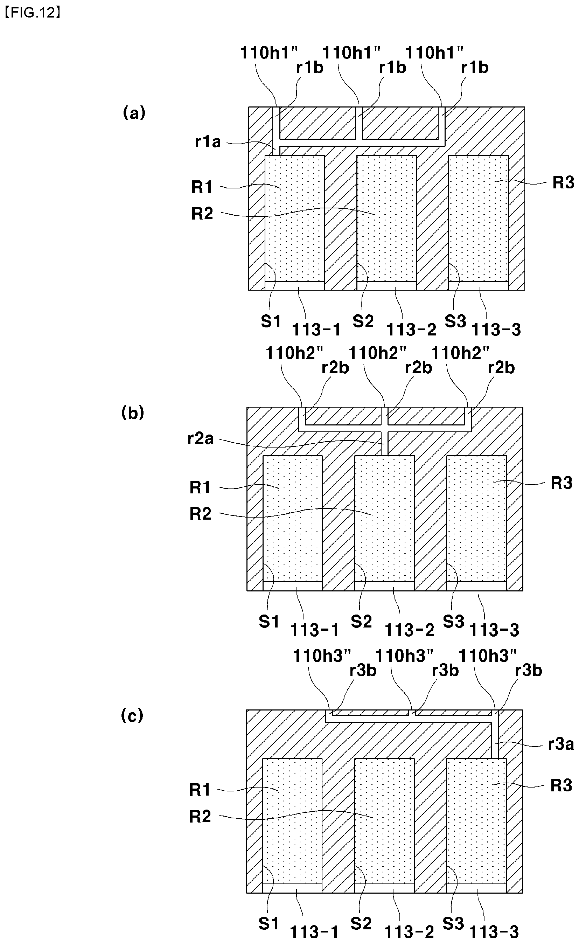

As illustrated in FIGS. 11 and 12, the cartridge 110" according to another embodiment of the present invention may be configured such that the inside of the cartridge 110" is divided into a first space S1 filled with a first liquid material R1, a second space S2 filled with a second liquid material R2, and a third space S3 filled with a third liquid material R3, a first ejection hole 110h1" connected to the first space S1, a second ejection hole 110h2" connected to the second space S2, and a third ejection hole 110h3" connected to the third space S3 are defined in ejection positions that are mixed on the storage part 111, and pressing plates 113-1, 113-2, and 113-3 are disposed in the spaces, respectively.

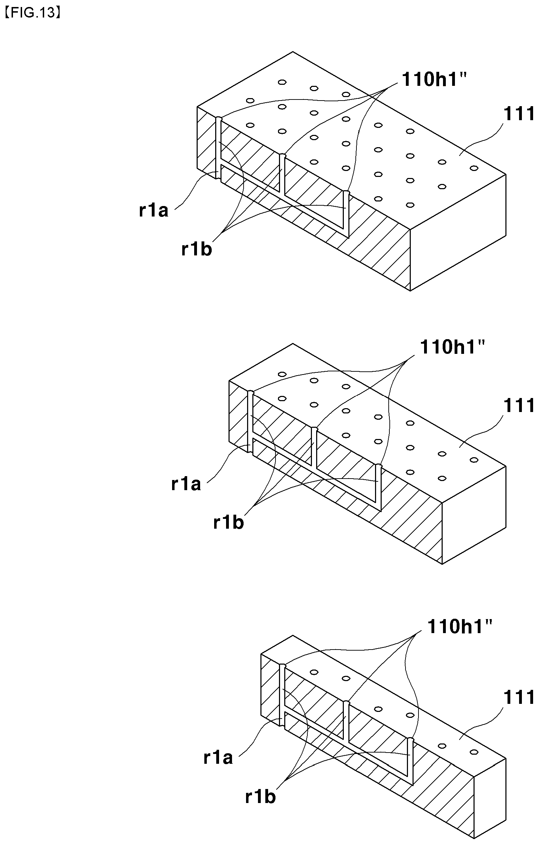

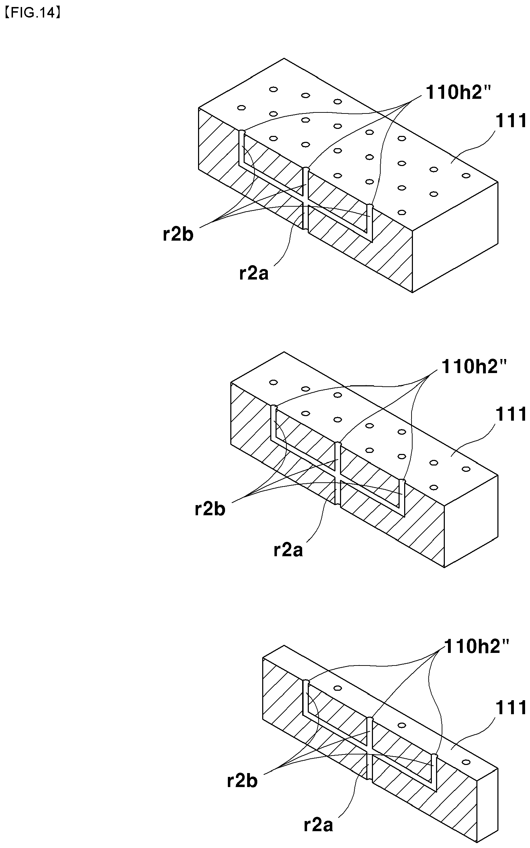

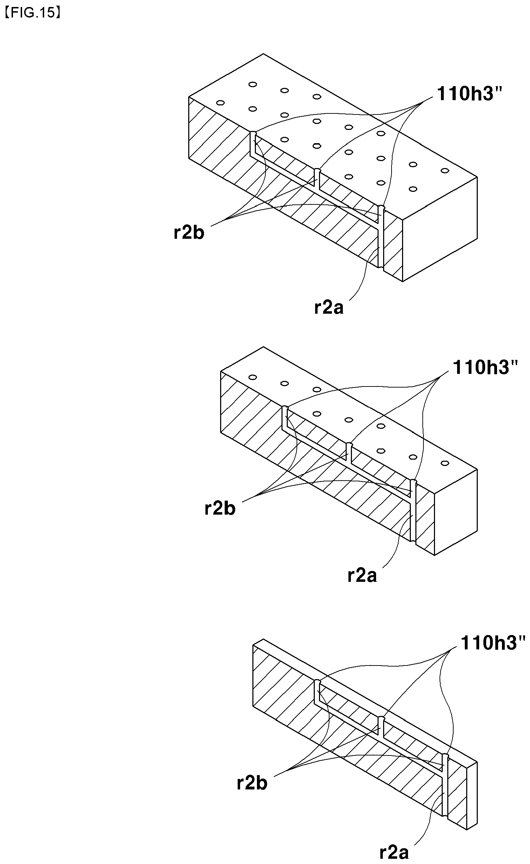

FIGS. 13 to 15 are detailed views illustrating a first ejection passage r1a and a first branch passage r1b, which are connected to the first space S1, a second ejection passage r2a and a second branch passage r2b, which are connected to the second space S2, and a third ejection passage r3a and a third branch passage r3b, which are connected to the third space S3. For example, the first liquid material R1 of the first space S1 may be ejected through the first ejection passage r1a, branched through three first branch passages r1b, and then ejected through three first ejection holes 110h1. Three first ejection passages r1a and nine first branch passages r1b may be defined in the first space S1.

Also, for example, the second liquid material R2 of the second space S2 may be ejected through the second ejection passage r2a, branched through three second branch passages r2b, and then ejected through three second ejection holes 110h2. Three second ejection passages r2a and nine second branch passages r2b may be defined in the second space S2.

Also, for example, the third liquid material R3 of the third space S3 may be ejected through the third ejection passage r3a, branched through three third branch passages r3b, and then ejected through three third ejection holes 110h3. Three third ejection passages r3a and nine third branch passages r3b may be defined in the third space S3.

As illustrated in FIG. 11, according to the above-described configuration of the first ejection passage r1a and the first branch passage r1b, which are connected to the first space S1, the second ejection passage r2a and the second branch passage r2b, which are connected to the second space S2, and the third ejection passage r3a and the third branch passage r3b, which are connected to the third space S3, the first ejection hole 110h1, the second ejection hole 110h2, and the third ejection hole 110h3 may be defined in ejection positions that are mixed on the storage part.

Although the embodiments of the present invention have been described, it is understood that the present invention should not be limited to these embodiments but various changes and modifications can be made by one ordinary skilled in the art within the spirit and scope of the present invention as hereinafter claimed. Therefore, the scope of the present invention should be interpreted by the claims described to include these many variations.

## Claims

1. A three-dimensional (3D) printer comprising:
a liquid material supply unit having an ejection hole configured to allow a liquid material to be ejected upward and a storage part which is connected to the ejection hole and in which the ejected liquid material is stored;
a liquid layer-forming unit configured to form a liquid layer for 3D shaping by moving the liquid material stored in the storage part to a region irradiated with a shaping beam; and
a 3D shaping unit configured to perform the 3D shaping by irradiating the liquid layer formed on the work holder with the shaping beam.

2. The 3D printer of claim 1, wherein the liquid material supply unit comprises a cartridge filled with the liquid material,
wherein one side surface of the cartridge is the storage part, and the ejection hole communicating with the inside of the cartridge is defined in one side surface of the cartridge.

3. The 3D printer of claim 2, wherein a pressing plate configured to press the liquid material filled in the cartridge is disposed in the cartridge, and the liquid material is ejected through the ejection hole when the liquid material filled in the cartridge is pressed by the pressing plate.

4. The 3D printer of claim 3, wherein the inside of the cartridge is divided into a plurality of spaces, and the pressing plates are disposed in the spaces, respectively.

5. The 3D printer of claim 4, wherein liquid materials having different properties are filled in the spaces defined in the cartridge, respectively.

6. The 3D printer of claim 4, wherein the inside of the cartridge is divided into a first space filled with a first liquid material, ..., and a n-th space filled with a n-th liquid material, and a first ejection hole connected to the first space, ..., and a n-th ejection hole connected to the n-th space are defined in ejection positions that are mixed on the storage part.

7. The 3D printer of claim 3, wherein the liquid material supply unit comprises a pressing unit configured to press the pressing plate disposed in the cartridge for ejecting the liquid material filled in the cartridge.

8. The 3D printer of claim 1, wherein the liquid layer-forming unit comprises a recoater blade that reciprocates to form a liquid layer having a predetermined thickness on the work holder by sweeping the liquid material stored in the storage part, and
the 3D shaping unit comprises:
a light irradiator configured to perform the 3D shaping by irradiating the liquid layer formed on the work holder with the shaping beam according to a desired pattern; and
a vertical driving unit configured to ascend or descend the work holder by steps.

9. The 3D printer of claim 8, wherein a waste box configured to collect the liquid material remained after forming the liquid layer by the recoater blade is disposed at one side of the 3D shaping unit.

10. A 3D printer cartridge that is disposed in a 3D printer comprising: a liquid material supply unit having an ejection hole configured to allow a liquid material to be ejected upward and a storage part which is connected to the ejection hole and in which the ejected liquid material is stored; a liquid layer-forming unit configured to form a liquid layer for 3D shaping by moving the liquid material stored in the storage part to a region irradiated with a shaping beam; and a 3D shaping unit configured to perform the 3D shaping by irradiating the liquid layer formed on the work holder with the shaping beam,
wherein the cartridge is filled with the liquid material, one side of the cartridge is the storage part, and the ejection hole communicates with the one side.

11. The 3D printer cartridge of claim 10, wherein a pressing plate configured to press the liquid material filled in the cartridge is disposed in the cartridge, and the liquid material is ejected through the ejection hole when the liquid material filled in the cartridge is pressed by the pressing plate.

12. The 3D printer cartridge of claim 11, wherein the inside of the cartridge is divided into a plurality of spaces, and the pressing plates are disposed in the spaces, respectively.

13. The 3D printer cartridge of claim 12, wherein liquid materials having different properties are filled in the spaces defined in the cartridge, respectively.

14. The 3D printer cartridge of claim 12, wherein the inside of the cartridge is divided into a first space filled with a first liquid material, ..., and a n-th space filled with a n-th liquid material, and a first ejection hole connected to the first space, ..., and a n-th ejection hole connected to the n-th space are defined in ejection positions that are mixed on the storage part.
